# EUROPEAN PATENT APPLICATION

(11) **EP 0 735 305 A1**
(43) Date of publication of application: **02.10.1996**
(21) Application number: 96101061.8
(22) Date of filing: 25.01.1996
(51) Int. Cl.: F16L 9/14, F16L 11/12, F16L 9/12

(54) **Fuel supply system**

(30) Priority: 27.03.1995 GB 9506186
(71) Applicant: Glynwed Plastics Limited, Cannock, Staffordshire WS11 3NS (GB)
(72) Inventor: Barfield, Malcolm Raymond, Willenhall, West Midlands WV12 5FN (GB)
(74) Representative: Lesley, Sheila F.

(57) **Abstract**

A supply system for fluid fuel, particularly petrol, comprises composite pipes comprising an inner polymeric layer (1), an intermediate layer (2) of aluminium foil and a thin outer polymeric layer (3). The inner polymeric layer (1) provides the mechanical strength of the pipe, the foil layer (2) forms an impermeable barrier to prevent or reduce petrol permeation and to prevent ingress of external contaminants into the system, whilst the thin outer polymeric layer (3) protects the aluminium foil (2) from attack by agressive soils and chemicals external to the supply system.

## Description

THIS INVENTION relates to a supply system for fluid fuels, such as petrol.

The invention is of particular utility in motor vehicle filling stations. Petrol storage and delivery systems in such filling stations generally incorporate two categories of pipe work, namely pipes which are in continuous contact with petrol, (such as delivery lines extending between petrol storage tanks and petrol pumps) and pipes which carry petrol periodically (such as offset fill, and vent/vapour recovery lines).

Petrol loss by leakage and/or permeation through the pipe wall of those pipes in the first category is a known problem in petrol storage and delivery systems. Such petrol loss is not only economically undesirable, but is hazardous and environmentally damaging.

Traditionally, pipes made from impermeable materials such as steel have been used for pipes in continuous contact with petrol, but such pipes are prone to corrosion, leading to leakage. In addition, it is difficult to make joints in such steel piping systems which will remain leak free and impermeable over extended periods.

In order to counter at least some of the problems arising from leakage and/or permeation of petrol from pipes, secondary containment systems are known in which the fuel carrying pipe (primary carrier) is surrounded by an outer pipe (secondary containment) designed to contain any leakage of fuel from the primary pipe. Systems in which no such outer pipe is used are herein referred to as single containment systems.

It is an object of the present invention to provide a supply system for fluid fuel which is free from corrosion and is substantially impermeable.

According to the invention there is provided a supply system for fluid fuel which comprises at least one composite pipe comprising an inner polymeric layer, an outer polymeric layer and an intermediate impermeable metal layer between the inner and outer polymeric layers.

The supply system preferably comprises at least one fuel tank, a delivery pump and said composite pipe extending from the fuel tank to the delivery pump.

The system may be a single containment system or a secondary containment system with the composite pipe forming the primary fuel carrier.

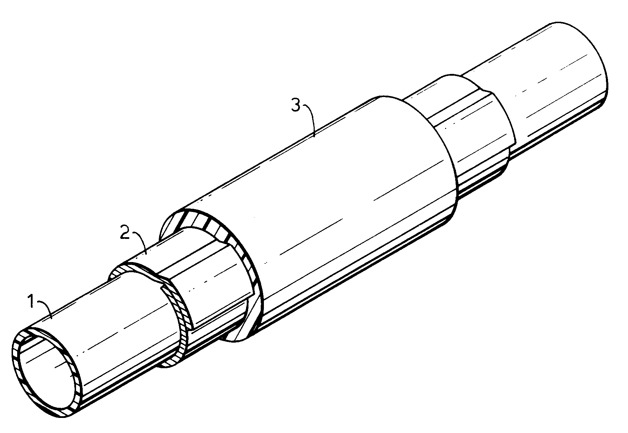

A composite pipe suitable for a fuel supply system in accordance with the invention is described below by way of example with reference to the sole figure of the accompanying drawings, which is a fragmentary perspective view of such a pipe.

Referring to the drawing, the composite pipe shown consists of an inner polymeric layer 1, a middle layer of aluminium foil 2, and an outer polymeric layer 3. The inner polymeric layer 1 is produced from any material which possesses the required mechanical properties, has appropriate chemical resistance, and has some inherent resistance to petrol permeation. The aluminium foil layer 2, being impermeable, acts as a barrier layer thereby reducing petrol permeation whilst preventing the ingress of any external contaminants into the delivery system. The thin outer polymeric layer 3 protects the aluminium from attack by aggressive soils and chemicals external to the delivery system.

Preferably, the aluminium foil 2 and outer polymeric layer 3 are not required to contribute to the mechanical strength of the composite pipe, the wall thickness of the inner polymeric layer 1 being selected to provide the required in-service performance of the composite as regards tensile and compressive strength and resistance to internal pressure. In practice, the outer layers do provide some additional mechanical strength but this is considered as an additional factor of safety over and above those safety factors applied to the inner polymeric layer.

The inner polymeric layer 1 is produced by standard extrusion techniques. The aluminium layer 2 is subsequently applied by applying an aluminium foil strip either longitudinally or helically by any suitable wrapping method such that the aluminium strip overlaps upon itself, thereby totally enclosing the inner polymeric layer 1. The aluminium layer 2 may be fixed in place by means of an adhesive applied to the aluminium prior to the wrapping process. Alternatively the aluminium can be welded along its overlap by any suitable process.

Successive lengths of the composite pipe can be joined end to end using any suitable technique but the preferred method is by fusion coupler. Preferably, in order to secure a strong and reliable joint by this technique, the inner layer 1 of the two pipe ends to be connected are the parts fused to the fusion coupler. To this end, the outer layer 3 and the foil layer 2 are stripped back for a short distance at each pipe end to expose the inner layers, which are inserted into the respective ends of the fusion coupler before the latter is activated. Such stripping back may be effected by hand or more preferably by a tool specifically designed for this task.

The features disclosed in the foregoing description, in the following claims and/or in the accompanying drawings may, both separately and in any combination thereof, be material for realising the invention in diverse forms thereof.

## Claims

1. A supply system for fluid fuel which comprises at least one composite pipe comprising an inner polymeric layer, an outer polymeric layer and an intermediate impermeable metal layer between the inner and outer polymeric layers.

2. A system according to claim 1 wherein said metal layer is formed by wrapping a tape of aluminium or aluminium alloy.

3. A supply system according to claim 1 or claim 2 which comprises at least one fuel tank, a delivery pump and said composite pipe extending from the fuel tank to the delivery pump.
